# EUROPÄISCHE PATENTSCHRIFT

(11) **EP 4 702 410 B1**
(45) Veröffentlichungstag und Bekanntmachung des Hinweises auf die Patenterteilung: **29.07.2026**
(21) Anmeldenummer: 24736324.5
(22) Anmeldetag: 11.06.2024
(51) Int. Cl.: G05B 23/02

(54) **VIRTUAL-REALITY-UNTERSTÜTZTES DIAGNOSEVERFAHREN FÜR EINE ANLAGE MIT COMPUTERBASIERTER AURALISIERUNG**
VIRTUAL-REALITY-SUPPORTED DIAGNOSTIC METHOD FOR A FACILITY WITH COMPUTER-BASED AURALISATION
PROCÉDÉ DE DIAGNOSTIC PRIS EN CHARGE PAR RÉALITÉ VIRTUELLE POUR UNE INSTALLATION À AURALISATION INFORMATIQUE

(30) Priorität: 15.06.2023 DE 102023205572
(43) Veröffentlichungstag der Anmeldung: 04.03.2026
(73) Patentinhaber: Siemens Aktiengesellschaft, 80333 München (DE)
(72) Erfinder: BARTH, Johannes, 76187 Karlsruhe (DE); TACKE, Dominik, 91058 Erlangen (DE)
(74) Vertreter: Siemens Patent Attorneys
(86) Internationale Anmeldenummer: PCT/EP2024/066091
(87) Internationale Veröffentlichungsnummer: WO 2024/256394

(56) Entgegenhaltungen:
- EP-A1- 3 968 105
- US-A1- 2020 342 846
- US-A1- 2021 311 188
- AURICH JAN C ET AL: "Noise investigation in manufacturing systems: An acoustic simulation and virtual reality enhanced method", 7 October 2012 (2012-10-07), XP093205848, Retrieved from the Internet <URL:https://www.sciencedirect.com/science/article/pii/S1755581712000636> DOI: 10.1016/j.cirpj.2012.09.010

## Beschreibung

Die Erfindung betrifft ein Verfahren zur Erkennung eines bestimmungswidrigen Betriebszustands in einer Anlage und ein dazu ausgebildetes Computerprogrammprodukt. Ebenso betrifft die Erfindung eine Auswertungseinheit zur Umsetzung des Verfahrens und eine Anlage, die mit einer solchen Auswertungseinheit ausgestattet ist. Ferner betrifft die Erfindung die Verwendung eines Virtual-Reality-Systems zum Inspizieren einer Anlage.

Aus der Patentanmeldung DE 10 2016 125 886 A1 ist ein Verfahren zur Berechnung einer Auralisation bekannt, bei dem eine erste Einheit zu einer Auralisation in einer Zeitdomäne eingesetzt wird und eine zweite Einheit zu einer Auralisation in einer Frequenzdomäne. In Abhängigkeit von einem Prüfkriterium wird zwischen der ersten und zweiten Einheit umgeschalten.

Aus der Promotionsschrift "Physically Base Real-Time Auralization of Interactive Virtual Environments" von Dirk Schröder, RWTH Aachen, ist eine Echtzeit-Raumakustik-Simulation bekannt, die dazu geeignet ist, Wohnräume, Vorlesungssäle, Konzertsäle oder U-Bahn-Stationen zu modellieren.

Aus der Patentschrift US 11,170,139 B1 ist ein echtzeitfähiges Akustik-Ray-Tracing-Verfahren bekannt, bei dem eine erste Empfängerposition in einem Raum festgelegt wird und eine Strahlenschar, die von einer zweiten Position aus emittiert wird.

Die Druckschrift DE 10 2016 125 886 A1 offenbart eine Vorrichtung zur effizienten Berechnung einer Auralisation mit einer Signalverarbeitunseinrichtung umfasst, die eine erste Einheit zur Auralisation in der Zeitdomäne und eine zweite Einheit zur Auralisation in der Frequenzdomäne aufweist. Zwischen der ersten und zweiten Einheit kann umgeschaltet werden.

Die Patentanmeldung DE 10 2017 103 385 A1 zeigt ein Verfahren zum Auswerten von Körperschall und eine dazu geeignete Vorrichtung. Darin wird ein neuronales Netz konstruiert und trainiert, so dass der Körperschall mittels Deep Learning auswertbar ist. Mittels des Verfahrens ist ein Systemzustand der Maschine identifizierbar.

Aus US 2017 / 0 286 572 A1 ist ein physikalisch-digitales System mit einem Digitalen Zwilling bekannt. Das physikalisch-digitale System weist zumindest einen Sensor auf, der mit dem Digitalen Zwilling verknüpft ist. Der Digitale Zwilling ist dazu ausgebildet, anhand der Sensorsignale das Betriebsverhalten beispielsweise eines Flugzeugtriebwerks nachzustellen.

Die Internationale Patentanmeldung WO 2011 / 038 838 A1 offenbart eine akustische Repräsentation von Zuständen in einer industriellen Anlage. Darin wird anhand eines aktuellen Zustands der industriellen Anlage rechnergestützt ein Audio-Profil ausgewählt und in ein akustisches Signal umgewandelt wird. Hierbei werden Signale aus einer Vielzahl an Quellen mit einem maschinellen Klassifikator gefiltert, gewichtet, aggregiert und/oder abstrahiert.

Die Druckschrift EP 3 968 105 A1 zeigt ein computerimplementiertes Verfahren zur Simulation einer Anlage, bei dem einem Simulationsmodell Eingangsdaten über die Anlage vorgegeben werden. Weiter werden dem Simulationsmodell Akustikdaten vorgegeben. Basierend auf den Eingangsdaten und den Akustikdaten wird eine Simulation der Anlage mittels akustischer Signale bewirkt.

Das Dokument XP093205848 offenbart den Oberbegriff des Anspruchs 1.

Um einen wirtschaftlichen und ausfallarmen Betrieb von Anlagen, insbesondere von Automatisierungssystemen, zu gewährleisten werden bis heute Fachleute eingesetzt, die die Anlage begehen und basierend auf eigenen Sinneseindrücken inspizieren, beispielsweise akustischen Eindrücken. Derartige Begehungen erfordern persönliche Anwesenheit. Es besteht ein Bedarf, die Inspektion von Anlagen effizienter zu gestalten und aus der Entfernung durchführen zu lassen. Gleichzeitig besteht Bedarf an aussagekräftigeren Diagnosemöglichkeiten, um vorliegende bestimmungswidrige Zustände zu erkennen. Der Erfindung liegt die Aufgabenstellung zugrunde, eine hierzu geeignete Möglichkeit bereitzustellen.

Die Aufgabenstellung wird durch ein erfindungsgemäßes Verfahren nach Anspruch 1 gelöst, das zum Erkennen eines bestimmungswidrigen Betriebszustands einer Anlage, die als Automatisierungssystem ausgebildet ist. Dabei kann die Anlage beispielsweise eine chemische Anlage, eine Raffinerie, eine Fertigungsanlage, ein Kraftwerk, oder ein Elektrolyseur sein. Die Anlage umfasst eine Mehrzahl an Komponenten, die zusammenwirken und dadurch einen Anlagenprozess verwirklichen. Die Komponenten sind jeweils als Schallquelle ausgebildet, als zumindest teilweise schallreflektierendes Objekt, als zumindest teilweise schallschluckendes Objekt, oder als Kombination hieraus. Die Komponenten sind folglich dazu ausgebildet, Schall zu emittieren, zu absorbieren, mit dem Schall in Wechselwirkung zu treten oder eine Kombination hieraus. Im Betrieb der Anlage stellen sich somit, abhängig von einer Position innerhalb der Anlage, unterschiedliche Klangbilder ein, sogenannte ortsabhängige Klangbilder. Das Verfahren umfasst einen ersten Schritt, in dem die Anlage in einem aktiven Betriebszustand bereitgestellt wird. Unter einem aktiven Betriebszustand ist hierbei ein Zustand zu verstehen, in dem der Anlagenprozess zumindest teilweise abläuft, anläuft oder ausläuft, so dass Schall emittiert wird. Weiter wird im ersten Schritt ein virtueller Raum, beispielsweise in einem Virtual-Reality-System, bereitgestellt, in dem die Anlage zumindest teilweise nachgestellt ist. Der virtuelle Raum ist durch einen Benutzer betrachtbar und virtuell begehbar.

Weiter weist das erfindungsgemäße Verfahren einen zweiten Schritt auf, in dem ein erstes Klangbild durch einen ersten Schallsensor erfasst wird und ein zweites Klangbild durch einen zweiten Schallsensor. Der erste und zweite Schallsensor sind in der Anlage angeordnet und mit einer geeigneten Auswertungseinheit verbunden. Im zweiten Schritt wird mittels des ersten und zweiten Schallsensors ein von zumindest einer ersten Schallquelle emittierter Klang an ihren jeweiligen Positionen erfasst. Des Weiteren gehört ein dritter Schritt zum erfindungsgemäßen Verfahren, in dem eine Empfängerposition innerhalb des virtuellen Raums vorgegeben wird, der im ersten Schritt bereitgestellt wird. Die Empfängerposition kann durch einen Benutzer vorgegeben sein, der ein Virtual-Reality-System benutzt, auf dem das erfindungsgemäße Verfahren durchgeführt wird. Im dritten Schritt wird auch ein virtuelles Klangbild ermittelt, das an der Empfängerposition vorliegt. Das Ermitteln des virtuellen Klangbilds kann hierbei anhand der mit dem ersten und zweiten Schallsensor erfassten Klänge erfolgen. Das Ermitteln des virtuellen Klangbilds kann hierbei unter Berücksichtigung von zumindest teilweise schallreflektierenden und/oder zumindest teilweise schallschluckenden Eigenschaften von Objekten in der Anlage erfolgen, die im virtuellen Raum nachgestellt sind. Insbesondere kann anhand der vom ersten und zweiten Schallsensor erfassten Klängen durch Berechnung von Schallausbreitungspfaden innerhalb der Anlage das virtuelle Klangbild an der Empfängerposition im virtuellen Raum ermittelt werden. Das virtuelle Klangbild entspricht hierbei einem Klangbild, das sich einstellt, wenn ein Benutzer sich in der Anlage an der korrespondierenden Position befindet.

Ferner umfasst das erfindungsgemäße Verfahren einen vierten Schritt, in dem das virtuelle Klangbild, das im dritten Schritt ermittelt wird, an den Benutzer, insbesondere den Benutzer des Virtual-Reality-Systems, und/oder eine Künstliche Intelligenz ausgegebenen wird. Anhand des ausgegebenen virtuellen Klangbilds, das an der Empfängerposition vorliegt, wird im vierten Schritt ein bestimmungswidriger Betriebszustand der Anlage erkannt. Das Ermitteln und Ausgeben des virtuellen Klangbilds stellt eine computerimplementierte Auralisierung eines akustischen Eindrucks, also eines Klangbilds, dar, der in der Anlage an der Position vorliegt, die der vorgegebenen Empfängerposition entspricht. Das virtuelle Klangbild kann hierbei als binaurales Klangbild ausgegeben werden. Das Erkennen des bestimmungswidrigen Betriebszustands kann durch den Benutzer erfolgen. Alternativ oder ergänzend kann die Künstliche Intelligenz als trainiertes Neuronales Netz ausgebildet sein, das Abweichungen von einem Soll-Klangbild an der Empfängerposition im virtuellen Raum bzw. an der korrespondierenden Position in der Anlage ermittelt, beispielsweise auf Basis einer Fourier-Analyse. Weiter alternativ oder ergänzend kann die Künstliche Intelligenz mit einer Erfahrungsdatenbank gekoppelt sein, in der Klangbilder von Störungen gespeichert sind, mit denen eine Mustererkennung im virtuellen Klangbild durchführbar ist. Bei einem erkannten bestimmungswidrigen Betriebszustand der Anlage kann im vierten Schritt auch eine Warnung ausgegeben werden.

Das erfindungsgemäße Verfahren erlaubt es, akustische Sinneseindrücke, also Klangbilder, durch eine Übertragung in ein Virtual-Reality-System als virtuelle Klangbilder auszuwerten. Auch komplexe Klangbilder, und damit auch korrespondierend komplexe virtuelle Klangbilder, sind mit hinreichender Präzision darstellbar. Die Erfindung beruht unter anderem auf der überraschenden Erkenntnis, dass virtuelle Klangbilder mit einer hinreichenden Realitätstreue in virtuellen Räumen darstellbar sind. Beim erfindungsgemäßen Verfahren ist eine hinreichend geringe Latenz zwischen den einzelnen Schallsensoren relevant. Eine Gesamtlatenz in der Ausgabe des virtuellen Klangbilds hingegen ist von nachrangiger Bedeutung. Ebenso basiert die Erfindung unter anderem auf der überraschenden Erkenntnis, dass bereits eine Kenntnis von Latenzunterschieden zwischen einzelnen Schallsensoren bereits ausreicht, um ein hinreichend realitätstreues virtuelles Klangbild zu ermitteln und auszugeben. Insgesamt ist eine Latenz infolge einer Datenübertragung zwischen der Anlage und der Ausgabe des virtuellen Klangbilds nicht qualitätsbeschränkend in puncto Realitätstreue. Dadurch ist das erfindungsgemäße Verfahren dazu geeignet, eine akustisch gestützte Inspektion, und damit akustisch gestützte Erkennung von bestimmungswidrigen Betriebszuständen aus der Ferne durchzuführen, beispielsweise über hunderte oder tausende Kilometer Distanz. Insgesamt wird so ein ortsunabhängiges Erkennen von bestimmungswidrigen Betriebszuständen der Anlage verwirklicht, die durch den Benutzer und/oder die Künstliche Intelligenz durchgeführt wird.

In einer Ausführungsform des beanspruchten Verfahrens kann die erste Schallquelle als erste virtuelle Schallquelle im virtuellen Raum abgebildet werden. Dazu wird anhand zumindest des ersten und zweiten Klangbilds durch Peilung, Triangulation oder Trilateration ermittelt, welche Frequenzen der jeweiligen Klangbilder aus welcher Richtung, bezogen auf die Lage der Schallsensoren, kommen. Dementsprechend ist ein Schallemissionsspektrum für einzelne Komponenten ermittelbar, die in der Anlage Schallquellen sind. Das jeweilige Schallemissionsspektrum einer Schallquelle ist dadurch als entsprechende virtuelle Schallquelle komponentenspezifisch im virtuellen Raum ausgebbar. Dadurch ist die erste virtuelle Schallquelle als virtuelles Gegenstück zu einer entsprechenden Komponente der Anlage im virtuellen Raum auch separat inspizierbar. Mittels des beanspruchten Verfahrens ist dadurch ein zielgerichtetes Erkennen von bestimmungswidrigen Zuständen möglich. Darüber hinaus können beim beanspruchten Verfahren auch Stützsignale emittiert werden, die in puncto

Des Weiteren können zumindest der dritte und vierte Schritt auch für eine zweite Schallquelle durchgeführt werden. Das beanspruchte Verfahren ist insgesamt auf eine Mehrzahl an Schallquellen übertragbar, was eine weitergehend zielgerichtete Erkennung bestimmungswidriger Zustände erlaubt. Im vierten Schritt kann das virtuelle Klangbild an der Empfängerposition anhand einer Kombination der ersten virtuellen Schallquelle mit der zweiten virtuellen Schallquelle ermittelt werden. Dies kann beispielsweise über sogenannten akustisches Ray-Tracing erfolgen. Das virtuelle Klangbild entspricht damit einem überlagerten Klangbild, das sich aus der korrespondierenden ersten und zweiten Schallquelle in der Anlage unter Berücksichtigung der Empfängerposition ergibt. Das beanspruchte Verfahren ist in überraschend einfacher Weise rechenkapazitätsschonend auf komplexe Anlagen mit einer Mehrzahl an Schallquelle skalierbar, wodurch auch komplexe Anlagen im virtuellen Raum inspizierbar sind.

Ebenso kann im beanspruchten Verfahren das virtuelle Klangbild auf einem Virtual-Reality-Headset ausgegeben werden, wobei die Anlage auf diesem virtuell begehbar dargestellt wird. Virtual-Reality-Headsets, die zu einem Virtual-Reality-System gehören, bieten einen erhöhten Grad an Realitätstreue und sind in einfacher Weise verfügbar. Ferner werden Virtual-Reality-Headsets in anderen Anwendungsgebieten, beispielsweise der Unterhaltungsindustrie, eingesetzt. Das beanspruchte Verfahren nutzt mit dem Virtual-Reality-Headset ein Ausgabemittel, das schnell weiterentwickelt wird, so dass Fortschritte bei Virtual-Reality-Headsets schnell durch das beanspruchte Verfahren nutzbar sind. Ferner ist eine Warnung im vierten Schritt des Verfahrens über das Virtual-Reality-Headset ausgebbar.

In einer weiteren Ausführungsform des beanspruchten Verfahrens kann für eine virtuelle Schallquelle in einer Darstellung auf dem Virtual-Reality-Headset nach einer Auswahl durch den Benutzer ein Betriebsdatensatz der korrespondierenden Schallquelle ausgegeben werden. Darin können Betriebsdaten der Komponente, die eine Schallquelle in der Anlage ist und als virtuelle Schallquelle nachgestellt ist, angezeigt werden. Beispielsweise kann die Komponente ein Elektromotor sein und als Betriebsdaten dessen aktuelle Drehzahl angezeigt werden. Der Benutzer kann somit das ausgegebene virtuelle Klangbild gegenüber den Betriebsdaten plausibilisieren. Das Erkennen eines bestimmungswidrigen Zustands wird so weiter unterstützt. Das Darstellen des Betriebsdatensatzes kann auch als eine graphische Anzeige ausgebildet sein, die einer visuellen Wiedergabe der im virtuellen Raum nachgestellten Anlage überlagert ist. Dies kann beispielsweise eine eingeblendete Falschfarbendarstellung sein, die auch als Heatmap bezeichnet wird. Mittels der graphischen Anzeige kann jegliche vorliegende Größe dargestellt werden, die den Betrieb der Anlage beschreibt, beispielsweise akustische Größen, die ein Frequenzband einer virtuellen Schallquelle oder ein vorliegender Lautstärkepegel an der Empfängerposition. Das Erkennen eines bestimmungswidrigen Zustands der Anlage wird so weiter erleichtert und beschleunigt.

Darüber hinaus kann zumindest eine Komponente der Anlage ein Motor, eine Pumpe, ein Rührwerk ein Lüfter oder eine andere mechanische Applikation sein. Derartige Komponenten weisen bewegliche Teile auf und erzeugen Betriebsgeräusche, die abhängig vom vorliegenden Betriebszustand, insbesondere einer Drehzahl, charakteristisch sind. Dementsprechend sind Abweichungen hiervon aussagekräftige Anzeichen für einen bestimmungswidrigen Betriebszustand. Alternativ oder ergänzend kann zumindest eine Komponente der Anlage auch mit einem Prozessmedium durchströmbare Leitungen sein, die bei entsprechender Durchströmung eine akustische Charakteristik aufweisen. Weiter alternativ oder ergänzend kann zumindest eine Komponente der Anlage ein Pneumatikmodul sein, bei dem eine Leckage mittels des beanspruchten Verfahrens akustisch erkennbar ist. Gleichermaßen kann die zumindest eine Komponente eine Hochspannungsanwendung sein, bei der Schaltvorgänge akustisch identifizierbar sind. Das beanspruchte Verfahren ist in besonderer Weise dazu geeignet, bei einer breiten Spanne von Komponenten bestimmungswidrige Betriebszustände zu erkennen. Das Erkennen kann hierbei durch den Benutzer oder durch die Künstliche Intelligenz erfolgen.

Das beanspruchte Verfahren weist einen fünften Schritt auf, in dem eine virtuelle Schallquelle durch den Benutzer ausgewählt wird, die einer Komponente in der Anlage entspricht. Dies kann beispielsweise innerhalb des virtuellen Raums erfolgen, der durch das Virtual-Reality-System bereitgestellt wird. Es folgt erfindungsgemäß ein sechster Schritt, in dem ein schallquellenspezifisches Klangbild ermittelt wird. Das schallquellenspezifische Klangbild wird hierbei zumindest anhand des ersten und zweiten Klangbilds ermittelt, die im zweiten Schritt erfasst werden. Das schallquellenspezifische Klangbild umfasst einen akustischen Eindruck, der auf den Schallemissionen beruht, die ausschließlich von der Komponente hervorgerufen werden, die der ausgewählten virtuellen Schallquelle entspricht. Das schallquellenspezifische Klangbild gilt hierbei spezifisch für eine Position, die der vorgegebenen Empfängerposition im virtuellen Raum entspricht. Das schallquellenspezifische Klangbild kann korrespondierend mit der ersten virtuellen Schallquelle ermittelt werden. In einem weiteren siebenten Schritt wird erfindungsgemäß das schallquellenspezifische Klangbild im virtuellen Raum als virtuelles schallquellenspezifisches Klangbild ausgegeben. Hierbei wird eine Schallkulisse reduziert, also deren Lautstärke in der Ausgabe verringert. Unter der Schallkulisse sind akustische Eindrücke zu verstehen, die nicht durch die ausgewählte virtuelle Schallquelle hervorgerufen sind. Hierdurch sind im virtuellen Raum störende akustische Eindrücke unterdrückbar und gezielt einzelne Komponenten akustisch inspizierbar. Dies erlaubt eine präzisere Diagnose, wenn ein bestimmungswidriger Betriebszustand an der zugehörigen Komponente vorliegt. Hierdurch wird die Aussagekraft des beanspruchten Verfahrens weiter gesteigert. Der fünfte, sechste und siebente Schritt können auch für eine Mehrzahl an virtuellen Schallquellen durchgeführt werden. Je mehr Schallsensoren eingesetzt werden, umso exakter ist die Schallkulisse vom schallquellenspezifischen Klangbild trennbar.

In einer Ausführungsform des beanspruchten Verfahrens kann das schallquellenspezifische Klangbild zumindest einer virtuellen Schallquelle der Künstlichen Intelligenz zur erkennen eines bestimmungswidrigen Betriebszustands der korrespondierenden Schallquelle in der Anlage, also einer ihrer Komponenten, bereitgestellt werden. Dabei kann durch den Benutzer eine Auswertungsmodus vorgegeben werden, beispielsweise durch eine Auswahl im virtuellen Raum. Durch Auswählen des Auswertungsmodus ist ein Algorithmus vorgebbar, durch den die virtuelle Schallquelle auszuwerten ist. Hierdurch sind im beanspruchten Verfahren auch rechenintensive Algorithmen einsetzbar, die zu rechenaufwändig sind um sie dauerhaft betriebsbegleitend ablaufen zu lassen. Alternativ oder ergänzend kann der Auswertungsmodus auch durch die Künstliche Intelligenz vorgeschlagen oder ausgewählt werden. Insgesamt werden so die Diagnosemöglichkeiten für das beanspruchte Verfahren in rechenkapazitätsschonender Weise erweitert.

Ferner kann im beanspruchten Verfahren ein Vergleichsdatensatz ausgewählt werden, der einen historischen Betrieb der Anlage umfasst. Der Vergleichsdatensatz wird der im virtuellen Raum dargestellten Anlage bereitgestellt, so dass der darin gespeicherte historische Betrieb der Anlage zumindest akustisch nachgestellt wird und analog zum dritten und vierten Schritt des Verfahrens ausgegeben wird. Dementsprechend wird basierend auf dem Vergleichsdatensatz ein virtuelles Klangbild an der vorgegebenen Empfängerposition ausgegeben. Beim Ausgeben des Vergleichsdatensatzes im virtuellen Raum ist die Anlage darin weiterhin begehbar. Während des Verfahrens kann vorgebbar zwischen dem virtuellen Klangbild, das auf dem Vergleichsdatensatz basiert, und dem virtuellen Klangbild, das auf den im zweiten Schritt erfassten Klangbildern basiert, beim Ausgeben umgeschaltet werden. Der Vergleichsdatensatz kann einen Gut-Zustand der Anlage abbilden. Der Benutzer und/oder die Künstliche Intelligenz werden so durch einen unmittelbaren Vergleich der virtuellen Klangbilder an der gleichen Empfängerposition beim Erkennen eines bestimmungswidrigen Betriebszustands unterstützt. Durch das virtuelle Begehen sind somit aussagekräftige Empfängerpositionen vorgebbar und dort akustisch untersuchbar. Zum Erkennen eines bestimmungswidrigen Zustands kann eine Differenz zwischen dem virtuellen Klangbild, das auf dem Vergleichsdatensatz basiert, und dem virtuellen Klangbild, das auf der Erfassung im zweiten Schritt basiert, gebildet werden und somit ein virtuelles Differenz-Klangbild vorliegt. Der bestimmungswidrige Betriebszustand ist durch den Benutzer und/oder die Künstliche Intelligenz durch Auswertung des virtuellen Differenz-Klangbilds erkennbar.

Des Weiteren können der erste und/oder zweite Schallsensor als Mikrofon, Richtmikrofon oder als Schallkamera ausgebildet sein. Mikrofone, Richtmikrofone und Schallkameras bieten eine erhöhte Messgenauigkeit und sind über leistungsfähige kommunikative Datenverbindungen mit der Auswertungseinheit der Anlage koppelbar. Ferner sind damit auch Schallemissionen außerhalb des menschlich hörbaren Frequenzspektrums erfassbar. Dadurch ist die Künstliche Intelligenz in ihrer Auswertung und Erkennung eines bestimmungswidrigen Betriebszustands weiter unterstützt. Beschädigungen, die charakteristische Klangbilder im Ultraschallspektrum oder Infraschallspektrum hervorrufen, sind dadurch ebenso nutzbar. Die Diagnosefähigkeiten des beanspruchten Verfahrens werden dadurch weiter gesteigert.

In einer weiteren Ausführungsform des beanspruchten Verfahrens wird eine erfasste Ultraschall-Emission oder eine erfasste Infraschall-Emission in ihrer Frequenzlage verschoben. Die Infraschall- oder Ultraschall-Emission wird insoweit in der Frequenzlage verschoben, dass diese im menschlich hörbaren Spektrum liegt. Die so frequenzverschobene Ultraschall- oder Infraschall-Emission wird im beanspruchten Verfahren als virtuelles Klangbild im vierten Schritt ausgegeben. Dazu wird die entsprechende Komponente, also ihre Repräsentanz im virtuellen Raum, durch den Benutzer ausgewählt. Ebenso ist durch den Benutzer ein Frequenzbereich vorgebbar, in dem die Ultraschall- oder Infraschallemission auszugeben und/oder auszuwerten ist. Das frequenzverschobene Ausgeben von Infraschall- bzw. Ultraschall-Emissionen stellt ein akustisches Gegenstück zu einer visuellen Darstellung mit Falschfarben, beispielsweise bei Infrarotbildern, dar. Das beanspruchte Verfahren ist folglich dazu geeignet, auch für Menschen unhörbare Frequenzbereiche in auswertbarer Weise bereitzustellen. Dadurch werden die Diagnosemöglichkeiten, insbesondere gegenüber einer Begehung in Präsenz, weiter gesteigert.

Die eingangs beschriebene Aufgabenstellung wird ebenso durch ein erfindungsgemäßes Computerprogrammprodukt nach Anspruch 10 gelöst. Das Computerprogrammprodukt ist dazu ausgebildet, Messdaten von einer Mehrzahl an Schallsensoren zu empfangen und zu verarbeiten. Weiter ist das Computerprogrammprodukt dazu ausgebildet, einen virtuellen Raum mit virtuellen Objekten, die Komponenten einer Anlage, insbesondere eines Automatisierungssystems, abbilden, zu berechnen und im Zusammenwirken mit einem geeigneten Gerät, beispielsweise einem Virtual-Reality-Headset, nachzustellen. Das Nachstellen des virtuellen Raums mit den virtuellen Objekten umfasst hierbei ein visuelles und akustisches Nachstellen. Erfindungsgemäß ist das Computerprogrammprodukt dazu ausgebildet, zumindest eine Ausführungsform der oben skizzierten Verfahren durchzuführen. Die Merkmale des zugrundeliegenden Verfahrens sind daher ohne Weiteres auch auf das erfindungsgemäße Computerprogrammprodukt übertragbar. Das zugrundeliegende Verfahren ist in rechenkapazitätsschonender Weise durchführbar. Das Computerprogrammprodukt ist insbesondere dazu geeignet, die Messdaten von Schallsensoren zu empfangen, die von dem Gerät, auf dem der virtuelle Raum dargestellt wird, entfernt sind. Das Computerprogrammprodukt ist insgesamt zu einem ortsunabhängigen Inspizieren, insbesondere akustischem Inspizieren, der zugehörigen Anlage geeignet. Weiter kann das Computerprogrammprodukt monolithisch ausgebildet sein, also auf einer einzelnen Hardwareplattform ausführbar sein. Alternativ kann das Computerprogrammprodukt modular ausgebildet sein und eine Mehrzahl an Teilprogrammen umfassen, die auf separaten Hardwareplattformen ausführbar sind. Die Teilprogramme sind über zumindest eine kommunikative Datenverbindung miteinander verbunden und wirken darüber zusammen, um die Funktionalität des beanspruchten Computerprogrammprodukts bereitzustellen. Das Computerprogrammprodukt kann auf einer Speichereinheit, beispielsweise einem USB-Speicher, einer Festplatte oder einem optischen Datenträger in remanenter Form gespeichert sein.

In einer Ausführungsform des beanspruchten Computerprogrammprodukts kann dieses mit einem Digitalen Zwilling der nachzustellenden Anlage gekoppelt sein. Alternativ kann das Computerprogrammprodukt einen Digitalen Zwilling der Anlage umfassen. Der Digitale Zwilling ist über kommunikative Datenverbindungen mit Komponenten der Anlage, beispielsweise einer Steuereinheit und/oder Schallsensoren, verbunden. Folglich ist der Digitale Zwilling dazu geeignet, einen vorliegenden Betriebszustand der Anlage zu erfassen und in einem digitalen Abbild der Anlage nachzuführen. Das digitale Abbild im Digitalen Zwilling ist dazu ausgebildet, eine Wechselwirkung von Komponenten der Anlage untereinander und mit seiner Umgebung nachzustellen. Der Digitale Zwilling kann beispielsweise als Digitaler Zwilling gemäß der Druckschrift US 2017/286572 A1 ausgebildet sein. Digitale Zwillinge weisen typischer präzise Simulationsroutinen auf, deren Leistungsfähigkeit durch das zugrundeliegende Verfahren nutzbar ist. Das virtuelle Klangbild kann basierend auf einer Mehrzahl an separaten Simulationen von Schallausbreitungen ermittelt werden, die als Co-Simulationen im Sinne des Europäischen Patents EP 4 016 216 B1 zusammenwirken.

Ebenso wird die zugrundeliegende Aufgabenstellung durch eine erfindungsgemäße Auswertungseinheit nach Anspruch 12 gelöst. Die Auswertungseinheit ist dazu ausgebildet, eine Mehrzahl an Messsignalen von einer Mehrzahl an Schallsensoren zu empfangen. Des Weiteren verfügt die Auswertungseinheit über eine Datenschnittstelle, über die Betriebsdaten einer nachzustellenden Anlage empfangbar sind. Die Überwachungseinheit ist zu einem Speichern und Ausführen eines Computerprogrammprodukt geeignet, das dazu geeignet ist, die empfangenen Messdaten und die Betriebsdaten auszuwerten. Erfindungsgemäß ist das Computerprogrammprodukt nach einer der oben skizzierten Ausführungsformen ausgebildet. Die Auswertungseinheit kann als Leitrechner, als Speicherprogrammierbare Steuerung, oder als Computer-Cloud ausgebildet sein. Alternativ oder ergänzend kann die Auswertungseinheit mit einer Operator Station gekoppelt sein oder zur Operator Station der Anlage gehören.

Die Datenschnittstelle der Auswertungseinheit, die zum Empfangen der Betriebsdaten der nachzustellenden Anlage ausgebildet ist, kann als sogenannte Application Programming Interface, auch kurz API genannt, ausgebildet sein. Über die als Application Programming Interface ausgebildete Schnittstelle kann die Auswertungseinheit dazu ausgebildet sein, mit der Steuereinheit der nachzustellenden Anlage gekoppelt sein. Alternativ oder ergänzend kann die Steuereinheit ebenso mit einer Datenschnittstelle versehen sein, die auch als Application Programming Interface ausgebildet sein kann. Die Datenschnittstellen der Auswertungseinheit und/oder der Steuereinheit kann können insbesondere dazu ausgebildet sein, eine Datenverbindung zwischen dem Steuerungsprogramm auf der Steuereinheit und dem Computerprogrammprodukt auf der Auswertungseinheit herzustellen.

Ferner wird die Aufgabenstellung durch eine erfindungsgemäße Anlage nach Anspruch 14 gelöst, die insbesondere als Automatisierungssystem ausgebildet sein kann. Die Anlage umfasst eine Mehrzahl an Komponenten, die zu einem Ausführen eines Anlagenprozesses zusammenwirken. Die Komponenten sind jeweils als Schallquelle, als zumindest teilweise schallreflektierendes Objekt, als zumindest teilweise schallschluckendes Objekt, oder eine Kombination hieraus ausgebildet. Die Anlage umfasst auch eine Überwachungseinheit, die dazu eingerichtete ist, einen bestimmungswidrigen Betriebszustand der Anlage zu erkennen. Erfindungsgemäß ist die Überwachungseinheit der Anlage gemäß einer der oben beschriebenen Ausführungsformen ausgebildet.

Die eingangs skizzierte Aufgabe wird gleichermaßen durch ein erfindungsgemäßes System nach Anspruch 15 mit einem Virtual-Reality-System und einer Auswertungseinheit gelöst. Das Virtual-Reality-System weist zumindest ein Virtual-Reality-Headset auf und ist zu einem computerbasierten Auralisieren eines Klangbilds an einer vorgebbaren Empfängerposition innerhalb eines virtuellen Raums ausgebildet ist. Erfindungsgemäß wird das Virtual-Reality-System zu eingesetzt, einen bestimmungswidrigen Betriebszustand einer damit nachgestellten Anlage, insbesondere eines Automatisierungssystems, zu erkennen. Das Erkennen des bestimmungswidrigen Zustands kann hierbei ortsunabhängig erfolgen. Ferner kann auf dem Virtual-Reality-System auch eine Warnung an den Benutzer ausgegeben werden. Das Virtual-Reality-System ist erfindungsgemäß mit einer Auswertungseinheit nach einer der oben dargestellten Ausführungsformen verbunden. Die Merkmale der Auswertungseinheit, und damit auch die Merkmale des zugrundeliegenden Verfahrens, sind somit auf das Virtual-Reality-System übertragbar. Insbesondere kann das Virtual-Reality-System dazu eingerichtet sein, zumindest eines der oben beschriebenen Verfahren zumindest teilweise durchzuführen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die Merkmale der in den Figuren gezeigten Ausführungsformen mit den oben skizzierten Merkmalen kombinierbar. Es zeigen im Einzelnen:
- FIG 1: einen schematischen Aufbau eines Automatisierungssystems auf dem eine erste Ausführungsform des beanspruchten Verfahrens durchgeführt wird;
- FIG 2: einen schematischen Aufbau eines Automatisierungssystems auf dem eine zweite Ausführungsform des beanspruchten Verfahrens durchgeführt wird;
- FIG 3: einen schematischen Aufbau eines Automatisierungssystems auf dem eine dritte Ausführungsform des beanspruchten Verfahrens durchgeführt wird.

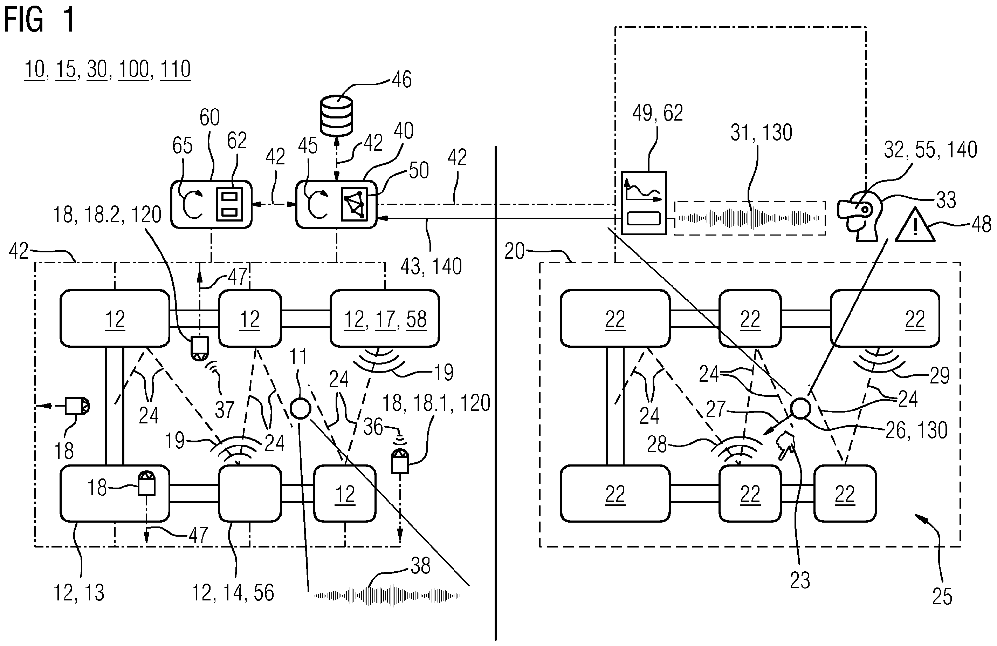

Ein Aufbau einer Anlage 10, auf der eine erste Ausführungsform des beanspruchten Verfahrens 100 durchgeführt wird, ist in FIG 1 schematisch dargestellt. Die Anlage 10 umfasst eine Mehrzahl an Komponenten 12, die in einem bestimmungsgemäßen Betrieb zusammenwirken um einen Anlagenprozess 15 durchzuführen. Eine der Komponenten 12 ist als Motor 14, eine weitere Komponente 12 als Lüfter 13 und eine noch weitere Komponente 12 als Rührwerk 17. Die Komponenten 12 sind jeweils über eine kommunikative Datenverbindung 42 zumindest mit einer Steuereinheit 60 der Anlage 10 verbunden. Die Komponenten 12 sind zur Durchführung des Anlagenprozesses 15 durch die Steuereinheit 60 mittels eines Steuerungsprogramms 65 ansteuerbar. Die Anlage 10 umfasst ebenso eine Mehrzahl an Schallsensoren 18, die jeweils als Mikrofone oder Schallkameras ausgebildet sind. Unter den Komponenten 12 sind der Motor 14 und das Rührwerk 17 als Schallquellen ausgebildet und geben Schallemissionen ab, die einen Klang 19 ergeben. Die weiteren Komponenten 12 sind jeweils als zumindest teilweise schallreflektierende Objekte und/oder zumindest teilweise schallschluckende Objekte ausgebildet. Die Komponenten 12 wirken sich somit auf Schallausbreitungspfade 24 aus, die sich für die Schallemissionen bzw. Klänge 19 ergeben. In Abhängigkeit von einer Position 11 in der Anlage 10 ergibt sich somit ein ortsabhängiges Klangbild 38. Die Anlage 10 wird in einem ersten Schritt 110 des Verfahrens 100 in einem aktiven Betriebszustand bereitgestellt. Unter einem aktiven Betriebszustand ist hierbei ein Betrieb zu verstehen, in dem der Anlagenprozess 15 zumindest teilweise abläuft und an zumindest einer Komponente 12 eine Schallemission, also ein Klang 19, auftritt.

Im ersten Schritt 110 des Verfahren 100 wird auch ein virtueller Raum 20 bereitgestellt, in dem die Anlage 10 nachgestellt wird. Im virtuellen Raum 20 befindet sich ein Digitaler Zwilling 25 der Anlage 10, der eine Mehrzahl an virtuellen Objekten 22 umfasst, die jeweils eine Komponente 12 des Automatisierungssystems 10 nachstellen. Der virtuelle Raum 20 wird einem Benutzer 33 über ein Virtual-Reality-Headset 32 begehbar dargestellt, das zu einem Virtual-Reality-System 30 gehört. Durch den Benutzer 33 ist darüber eine Empfängerposition 26 innerhalb des virtuellen Raums 20 vorgebbar, die der in FIG 1 gezeigten Position 11 in der Anlage 10 entspricht. Die Begehbarkeit ist in FIG 1 durch den Pfeil 27 versinnbildlicht. Der virtuelle Raum 20 wird durch ein Computerprogrammprodukt 45 bereitgestellt, das auf einer Auswertungseinheit 40 der Anlage 10 ausführbar gespeichert ist.

Zum Verfahren 100 gehört auch ein zweiter Schritt 120, in dem von einem ersten Schallsensor 18.1 ein erstes Klangbild 36 erfasst wird und von einem zweiten Schallsensor 18.2 ein zweites Klangbild 37. Das erste und zweite Klangbild 36, 37 sind je ein akustischer Eindruck, der sich an der Position des jeweiligen Schallsensors 18.1, 18.2 in Abhängigkeit von den Klängen 19 und den Schallausbreitungspfaden 24 in der Anlage 10 ergibt. Im zweiten Schritt 120 wird eine Komponente 12, nämlich der Motor 14, als erste Schallquelle 56 ermittelt. Dazu wird mittels des Computerprogrammprodukt 45, das auf der Auswertungseinheit 40 der Anlage 10 ausgeführt wird, eine Triangulation, eine Trilateration oder eine Peilung durchgeführt. Insgesamt wird basierend auf dem ersten und zweiten Klangbild 37, 39 ermittelt, welcher Klang 19 separat von der ersten Schallquelle 56 ausgesendet wird. Ebenso wird im zweiten Schritt 120 eine Komponente 12, nämlich das Rührwerk 17, als zweite Schallquelle 58 ermittelt. Das Ermitteln der zweiten Schallquelle 58 läuft hierbei analog zur ersten Schallquelle 56 ab. Auch zur zweiten Schallquelle 58 wird ein emittierter Klang 19 ermittelt.

Des Weiteren umfasst das Verfahren 100 einen dritten Schritt, in dem die Empfängerposition 26 im virtuellen Raum 20 durch den Benutzer 33 vorgegeben wird. Die Empfängerposition 26 wird durch das Begehen 27 des virtuellen Raums 20 gemäß einer Darstellung durch das Virtual-Reality-Headset vorgegeben. Im dritten Schritt 130 wird ein virtuelles Klangbild 31 ermittelt, das einem ortabhängigen Klangbild 38 entspricht, das an der korrespondierenden Position 11 in der Anlage 10 wahrnehmbar ist. Zum Ermitteln des virtuellen Klangbilds 31 werden virtuelle Objekte 22 als erste virtuelle Schallquelle 28 und als zweite virtuelle Schallquelle 29 im virtuellen Raum 20 nachgestellt. Es werden im virtuellen Raum 20 Schallausbreitungspfade 24 berechnet und so das virtuelle Klangbild 31 an der Empfängerposition 26 ermittelt. Die virtuellen Objekte 22 sind korrespondierend zu den Komponenten 12 auch zumindest teilweise schallreflektierende und/oder zumindest teilweise schallschluckende virtuelle Objekte 22. Im virtuellen Raum 20 wird zur Ermittlung der Schallausbreitungspfade 24 darin das korrespondierende zumindest teilweise schallreflektierende und/oder zumindest teilweise schallschluckende Verhalten nachgestellt. Das Ermitteln des virtuellen Klangbilds 31 wird ebenso durch das Computerprogrammprodukt 40 durchgeführt, das mit dem Digitalen Zwilling 25 zumindest gekoppelt ist.

Ferner umfasst das Verfahren 100 einen vierten Schritt 140, in dem das virtuelle Klangbild 31 an den Benutzer 33 ausgegeben wird. Das Ausgeben an den Benutzer 33 erfolgt über das Virtual-Reality-Headset 32. Das Ausgeben erfolgt binaural und stellt eine Auralisierung 55 dar. Dementsprechend stimmt das virtuelle Klangbild 31 mit dem ortabhängigen Klangbild 38 überein, das an der Position 11 in der Anlage 10 wahrnehmbar ist, die der vorgegebenen Empfängerposition 26 entspricht. Durch das ausgegebene virtuelle Klangbild 31 wird durch den Benutzer 33 ein bestimmungswidriger Zustand der Anlage 10 erkannt. Ebenso erfolgt im vierten Schritt 140 ein Ausgeben 43 des virtuellen Klangbilds 31 an eine Künstliche Intelligenz 50, die mit dem Computerprogrammprodukt 45 zumindest zusammenwirkt. Die Künstliche Intelligenz 50 ist als Neuronales Netz ausgebildet und dazu geeignet, das virtuelle Klangbild 31 mit Klangbildern aus einer Datenbank 46 zu vergleichen, die mit der Auswertungseinheit 40 über eine kommunikative Datenverbindung 42 verbunden ist. Zum Erkennen des bestimmungswidrigen Betriebszustands wird ein Soll-Klangbild aus der Datenbank 46, dass einem Bereich der vorgegebenen Empfängerposition 26 zugeordnet ist, mit dem virtuellen Klangbild 31 durch die Künstliche Intelligenz 50 verglichen. Wenn ein bestimmungswidriger Betriebszustand der Anlage 10 erkannt wird, wird eine Warnung 48 ausgegeben. Die Warnung 48 wird über eine kommunikative Datenverbindung 42 zwischen der Auswertungseinheit 40 und der Steuereinheit 60 übertragen und so eine Reaktion durch das Steuerungsprogramm 65 ermöglicht. Ferner wird im Verfahren 100 durch den Benutzer 33 eines der virtuellen Objekte 22 ausgewählt. Die Auswahl ist durch das Handsymbol 23 dargestellt. Die Auswahl 23 erfolgt innerhalb des virtuellen Raums 20. Zum ausgewählten virtuellen Objekt 22 werden Betriebsdaten 62 zu der Komponente 12 der Anlage 10 abgerufen, das dem ausgewählten virtuellen Objekt 22 entspricht. Die Betriebsdaten 62 umfassen Messwerte, vorliegende Steuerbefehle, Sollwerte und/oder sonstige Parameter, durch die der Betrieb der jeweiligen Komponente 12 charakterisiert ist. Die Betriebsdaten 62 werden dem Benutzer 33 im virtuellen Raum 20 als virtuelle Repräsentanz 49, beispielsweise als ein im virtuellen Raum 20 schwebendes Fenster, dargestellt. Dem Benutzer 33 werden so die zur ausgewählten Komponente 22 zugehörigen Betriebsdaten 62 zu einem Plausibilisieren der ausgegebenen Warnung 48 und/oder zur weiteren Diagnose im virtuellen Raum bereitgestellt. Das Verfahren 100 erlaubt es, dass der virtuelle Raum 20, in dem die Anlage 10 nachgestellt ist, von diesem entfernt dargestellt werden kann. Die Anlage 10 ist durch das Verfahren 100 nach FIG 1 somit für den Benutzer 33 ortsunabhängig inspizierbar.

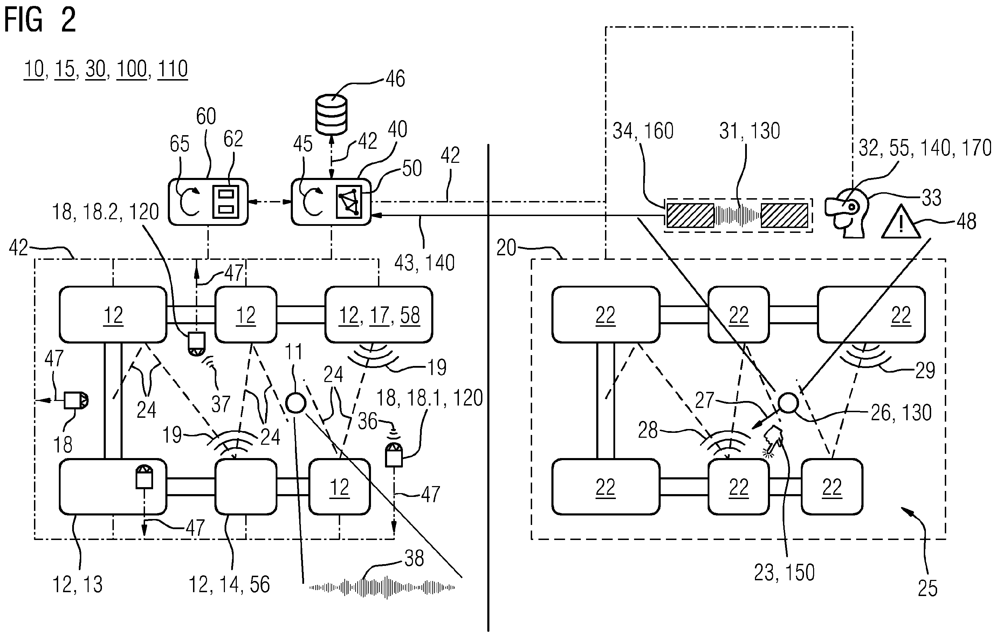

Ein Aufbau einer Anlage 10, auf dem eine zweite Ausführungsform des beanspruchten Verfahrens 100 durchgeführt wird, ist in FIG 2 schematisch dargestellt. Die Anlage 10 umfasst eine Mehrzahl an Komponenten 12, die in einem bestimmungsgemäßen Betrieb zusammenwirken, um einen Anlagenprozess 15 durchzuführen. Eine der Komponenten 12 ist als Motor 14, eine weitere Komponente 12 als Lüfter 13 und eine noch weitere Komponente 12 als Rührwerk 17. Die Komponenten 12 sind jeweils über eine kommunikative Datenverbindung 42 zumindest mit einer Steuereinheit 60 der Anlage 10 verbunden. Die Komponenten 12 sind zur Durchführung des Anlagenprozesses 15 durch die Steuereinheit 60 mittels eines Steuerungsprogramms 65 ansteuerbar. Die Anlage 10 umfasst ebenso eine Mehrzahl an Schallsensoren 18, die jeweils als Mikrofone oder Schallkameras ausgebildet sind. Unter den Komponenten 12 sind der Motor 14 und das Rührwerk 17 als Schallquellen ausgebildet und geben Schallemissionen ab, die einen Klang 19 ergeben. Die weiteren Komponenten 12 sind jeweils als zumindest teilweise schallreflektierende Objekte und/oder zumindest teilweise schallschluckende Objekte ausgebildet. Die Komponenten 12 wirken sich somit auf Schallausbreitungspfade 24 aus, die sich für die Schallemissionen bzw. Klänge 19 ergeben. In Abhängigkeit von einer Position 11 in der Anlage 10 ergibt sich somit ein ortsabhängiges Klangbild 38. Die Anlage 10 wird in einem ersten Schritt 110 des Verfahrens 100 in einem aktiven Betriebszustand bereitgestellt. Unter einem aktiven Betriebszustand ist hierbei ein Betrieb zu verstehen, in dem der Anlagenprozess 15 zumindest teilweise abläuft und an zumindest einer Komponente 12 eine Schallemission, also ein Klang 19, auftritt.

Im ersten Schritt 110 des Verfahren 100 wird auch ein virtueller Raum 20 bereitgestellt, in dem die Anlage 10 nachgestellt wird. Im virtuellen Raum 20 befindet sich ein Digitaler Zwilling 25 der Anlage 10, der eine Mehrzahl an virtuellen Objekten 22 umfasst, die jeweils eine Komponente 12 der Anlage 10 nachstellen. Der virtuelle Raum 20 wird einem Benutzer 33 über ein Virtual-Reality-Headset 32 begehbar dargestellt, das zu einem Virtual-Reality-System 30 gehört. Durch den Benutzer 33 ist darüber eine Empfängerposition 26 innerhalb des virtuellen Raums 20 vorgebbar, die der in FIG 2 gezeigten Position 11 in der Anlage 10 entspricht. Die Begehbarkeit ist in FIG 2 durch den Pfeil 27 versinnbildlicht. Der virtuelle Raum 20 wird durch ein Computerprogrammprodukt 45 bereitgestellt, das auf einer Auswertungseinheit 40 der Anlage 10 ausführbar gespeichert ist.

Zum Verfahren 100 gehört auch ein zweiter Schritt 120, in dem von einem ersten Schallsensor 18.1 ein erstes Klangbild 36 erfasst wird und von einem zweiten Schallsensor 18.2 ein zweites Klangbild 37. Das erste und zweite Klangbild 36, 37 sind je ein akustischer Eindruck, der sich an der Position des jeweiligen Schallsensors 18.1, 18.2 in Abhängigkeit von den Klängen 19 und den Schallausbreitungspfaden 24 in der Anlage 10 ergibt. Im zweiten Schritt 120 wird eine Komponente 12, nämlich der Motor 14, als erste Schallquelle 56 ermittelt. Dazu wird mittels des Computerprogrammprodukt 45, das auf der Auswertungseinheit 40 der Anlage 10 ausgeführt wird, eine Triangulation, eine Trilateration oder eine Peilung durchgeführt. Insgesamt wird basierend auf dem ersten und zweiten Klangbild 37, 39 ermittelt, welcher Klang 19 separat von der ersten Schallquelle 56 ausgesendet wird. Ebenso wird im zweiten Schritt 120 eine Komponente 12, nämlich das Rührwerk 17, als zweite Schallquelle 58 ermittelt. Das Ermitteln der zweiten Schallquelle 58 läuft hierbei analog zur ersten Schallquelle 56 ab. Auch zur zweiten Schallquelle 58 wird ein emittierter Klang 19 ermittelt.

Des Weiteren umfasst das Verfahren 100 einen dritten Schritt, in dem die Empfängerposition 26 im virtuellen Raum 20 durch den Benutzer 33 vorgegeben wird. Die Empfängerposition 26 wird durch das Begehen 27 des virtuellen Raums 20 gemäß einer Darstellung durch das Virtual-Reality-Headset vorgegeben. Im dritten Schritt 130 wird ein virtuelles Klangbild 31 ermittelt, das einem ortabhängigen Klangbild 38 entspricht, das an der korrespondierenden Position 11 in der Anlage 10 wahrnehmbar ist. Zum Ermitteln des virtuellen Klangbilds 31 werden virtuelle Objekte 22 als erste virtuelle Schallquelle 28 und als zweite virtuelle Schallquelle 29 im virtuellen Raum 20 nachgestellt. Es werden im virtuellen Raum 20 Schallausbreitungspfade 24 berechnet und so das virtuelle Klangbild 31 an der Empfängerposition 26 ermittelt. Die virtuellen Objekte 22 sind korrespondierend zu den Komponenten 12 auch zumindest teilweise schallreflektierende und/oder zumindest teilweise schallschluckende virtuelle Objekte 22. Im virtuellen Raum 20 wird zur Ermittlung der Schallausbreitungspfade 24 darin das korrespondierende zumindest teilweise schallreflektierende und/oder zumindest teilweise schallschluckende Verhalten nachgestellt. Das Ermitteln des virtuellen Klangbilds 31 wird ebenso durch das Computerprogrammprodukt 40 durchgeführt, das mit dem Digitalen Zwilling 25 zumindest gekoppelt ist.

Ferner umfasst das Verfahren 100 einen vierten Schritt 140, in dem das virtuelle Klangbild 31 an den Benutzer 33 ausgegeben wird. Das Ausgeben an den Benutzer 33 erfolgt über das Virtual-Reality-Headset 32. Das Ausgeben erfolgt binaural und stellt eine Auralisierung 55 dar. Dementsprechend stimmt das virtuelle Klangbild 31 mit dem ortabhängigen Klangbild 38 überein, das an der Position 11 in der Anlage 10 wahrnehmbar ist, die der vorgegebenen Empfängerposition 26 entspricht. Durch das ausgegebene virtuelle Klangbild 31 wird durch den Benutzer 33 ein bestimmungswidriger Zustand der Anlage 10 erkannt. Ebenso erfolgt im vierten Schritt 140 ein Ausgeben 43 des virtuellen Klangbilds 31 an eine Künstliche Intelligenz 50, die mit dem Computerprogrammprodukt 45 zumindest zusammenwirkt. Die Künstliche Intelligenz 50 ist als Neuronales Netz ausgebildet und dazu geeignet, das virtuelle Klangbild 31 mit Klangbildern aus einer Datenbank 46 zu vergleichen, die mit der Auswertungseinheit 40 über eine kommunikative Datenverbindung 42 verbunden ist. Zum Erkennen des bestimmungswidrigen Betriebszustands wird ein Soll-Klangbild aus der Datenbank 46, dass einem Bereich der vorgegebenen Empfängerposition 26 zugeordnet ist, mit dem virtuellen Klangbild 31 durch die Künstliche Intelligenz 50 verglichen. Wenn ein bestimmungswidriger Betriebszustand der Anlage 10 erkannt wird, wird eine Warnung 48 ausgegeben. Die Warnung 48 wird über eine kommunikative Datenverbindung 42 zwischen der Auswertungseinheit 40 und der Steuereinheit 60 übertragen und so eine Reaktion durch das Steuerungsprogramm 65 ermöglicht.

Ferner wird im Verfahren 100 in einem fünften Schritt 150 durch den Benutzer 33 eines der virtuellen Objekte 22 ausgewählt. Die Auswahl ist durch das Handsymbol 23 dargestellt. In einem weiteren sechsten Schritt 160 wird ein schallquellenspezifisches Klangbild 34 ermittelt, das an der vorgegebenen Empfängerposition 26 vorliegt. Das schallquellenspezifische Klangbild 34 basiert auf dem virtuellen Klangbild 31 an der Empfängerposition 26. Im sechsten Schritt 160 wird der Klang, der von der ersten virtuellen Schallquelle 28 emittiert wird, isoliert. Dementsprechend werden Klänge, die von anderen virtuellen Objekten 22 als der ersten virtuellen Schallquelle 28 als Schallkulisse 53 eingestuft. Der Anteil der Schallkulisse 53 wird in der Ausgabe des schallquellenspezifischen Klangbilds 34 mit einem einstellbaren Akustikdämpfer 44 ausgegeben. Durch den einstellbaren Akustikdämpfer 44 wird die Schallkulisse 53 mit reduzierter Lautstärke in einem siebten Schritt 170 des Verfahrens 100 ausgegeben. Durch den einstellbaren Akustikdämpfer 44 kann die Schallkulisse 53 im siebenten Schritt 170 auch vollständig ausgeblendet sein. In diesem Fall stellt das schallquellenspezifische Klangbild 34 einen theoretischen akustischen Eindruck in der Anlage 10 dar, der sich einstellt, wenn die nicht betrachteten Komponenten 12 still wären. Auch das schallquellenspezifische Klangbild 34 ist an die Künstliche Intelligenz 50 zu einem Erkennen eines bestimmungswidrigen Betriebszustands übertragbar. Insgesamt ist durch das Verfahren 100 nach FIG 2 eine auf akustischen Eindrücken basierende Diagnose möglich, die bei einer Begehung der Anlage 10 in Präsenz nicht möglich ist. Gleichzeitig wird mit dem Verfahren 100 nach FIG 2 das Spektrum an Diagnosemöglichkeiten bei einer für den Benutzer 33 bei einem ortsunabhängigen Inspizieren erweitert.

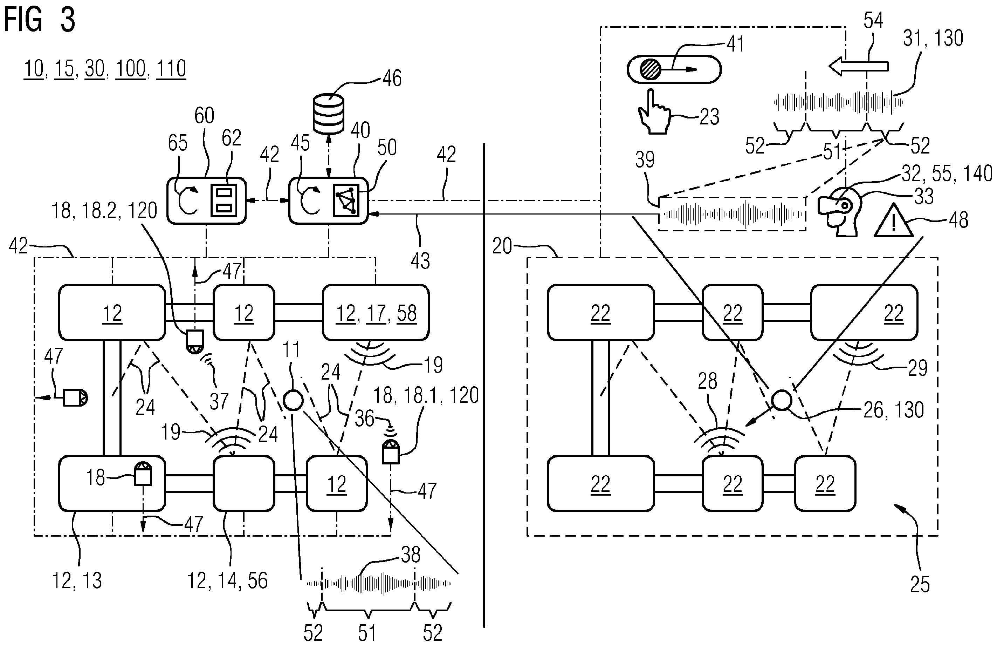

Ein Aufbau einer Anlage 10, auf der eine erste Ausführungsform des beanspruchten Verfahrens 100 durchgeführt wird, ist in FIG 3 schematisch dargestellt. Die Anlage 10 umfasst eine Mehrzahl an Komponenten 12, die in einem bestimmungsgemäßen Betrieb zusammenwirken um einen Anlagenprozess 15 durchzuführen. Eine der Komponenten 12 ist als Motor 14, eine weitere Komponente 12 als Lüfter 13 und eine noch weitere Komponente 12 als Rührwerk 17. Die Komponenten 12 sind jeweils über eine kommunikative Datenverbindung 42 zumindest mit einer Steuereinheit 60 der Anlage 10 verbunden. Die Komponenten 12 sind zur Durchführung des Anlagenprozesses 15 durch die Steuereinheit 60 mittels eines Steuerungsprogramms 65 ansteuerbar. Die Anlage 10 umfasst ebenso eine Mehrzahl an Schallsensoren 18, die jeweils als Mikrofone oder Schallkameras ausgebildet sind. Unter den Komponenten 12 sind der Motor 14 und das Rührwerk 17 als Schallquellen ausgebildet und geben Schallemissionen ab, die einen Klang 19 ergeben. Die weiteren Komponenten 12 sind jeweils als zumindest teilweise schallreflektierende Objekte und/oder zumindest teilweise schallschluckende Objekte ausgebildet. Die Komponenten 12 wirken sich somit auf Schallausbreitungspfade 24 aus, die sich für die Schallemissionen bzw. Klänge 19 ergeben. In Abhängigkeit von einer Position 11 in der Anlage 10 ergibt sich somit ein ortsabhängiges Klangbild 38. Die Anlage 10 wird in einem ersten Schritt 110 des Verfahrens 100 in einem aktiven Betriebszustand bereitgestellt. Unter einem aktiven Betriebszustand ist hierbei ein Betrieb zu verstehen, in dem der Anlagenprozess 15 zumindest teilweise abläuft und an zumindest einer Komponente 12 eine Schallemission, also ein Klang 19, auftritt.

Im ersten Schritt 110 des Verfahren 100 wird auch ein virtueller Raum 20 bereitgestellt, in dem die Anlage 10 nachgestellt wird. Im virtuellen Raum 20 befindet sich ein Digitaler Zwilling 25 der Anlage 10, der eine Mehrzahl an virtuellen Objekten 22 umfasst, die jeweils eine Komponente 12 der Anlage 10 nachstellen. Der virtuelle Raum 20 wird einem Benutzer 33 über ein Virtual-Reality-Headset 32 begehbar dargestellt, das zu einem Virtual-Reality-System 30 gehört. Durch den Benutzer 33 ist darüber eine Empfängerposition 26 innerhalb des virtuellen Raums 20 vorgebbar, die der in FIG 3 gezeigten Position 11 in der Anlage 10 entspricht. Die Begehbarkeit ist in FIG 3 durch den Pfeil 27 versinnbildlicht. Der virtuelle Raum 20 wird durch ein Computerprogrammprodukt 45 bereitgestellt, das auf einer Auswertungseinheit 40 der Anlage 10 ausführbar gespeichert ist.

Zum Verfahren 100 gehört auch ein zweiter Schritt 120, in dem von einem ersten Schallsensor 18.1 ein erstes Klangbild 36 erfasst wird und von einem zweiten Schallsensor 18.2 ein zweites Klangbild 37. Das erste und zweite Klangbild 36, 37 sind je ein akustischer Eindruck, der sich an der Position des jeweiligen Schallsensors 18.1, 18.2 in Abhängigkeit von den Klängen 19 und den Schallausbreitungspfaden 24 in der Anlage 10 ergibt. Im zweiten Schritt 120 wird eine Komponente 12, nämlich der Motor 14, als erste Schallquelle 56 ermittelt. Dazu wird mittels des Computerprogrammprodukt 45, das auf der Auswertungseinheit 40 der Anlage 10 ausgeführt wird, eine Triangulation, eine Trilateration oder eine Peilung durchgeführt. Insgesamt wird basierend auf dem ersten und zweiten Klangbild 37, 39 ermittelt, welcher Klang 19 separat von der ersten Schallquelle 56 ausgesendet wird. Ebenso wird im zweiten Schritt 120 eine Komponente 12, nämlich das Rührwerk 17, als zweite Schallquelle 58 ermittelt. Das Ermitteln der zweiten Schallquelle 58 läuft hierbei analog zur ersten Schallquelle 56 ab. Auch zur zweiten Schallquelle 58 wird ein emittierter Klang 19 ermittelt.

Des Weiteren umfasst das Verfahren 100 einen dritten Schritt, in dem die Empfängerposition 26 im virtuellen Raum 20 durch den Benutzer 33 vorgegeben wird. Die Empfängerposition 26 wird durch das Begehen 27 des virtuellen Raums 20 gemäß einer Darstellung durch das Virtual-Reality-Headset vorgegeben. Im dritten Schritt 130 wird ein virtuelles Klangbild 31 ermittelt, das einem ortabhängigen Klangbild 38 entspricht, das an der korrespondierenden Position 11 in der Anlage 10 wahrnehmbar ist. Zum Ermitteln des virtuellen Klangbilds 31 werden virtuelle Objekte 22 als erste virtuelle Schallquelle 28 und als zweite virtuelle Schallquelle 29 im virtuellen Raum 20 nachgestellt. Es werden im virtuellen Raum 20 Schallausbreitungspfade 24 berechnet und so das virtuelle Klangbild 31 an der Empfängerposition 26 ermittelt. Die virtuellen Objekte 22 sind korrespondierend zu den Komponenten 12 auch zumindest teilweise schallreflektierende und/oder zumindest teilweise schallschluckende virtuelle Objekte 22. Im virtuellen Raum 20 wird zur Ermittlung der Schallausbreitungspfade 24 darin das korrespondierende zumindest teilweise schallreflektierende und/oder zumindest teilweise schallschluckende Verhalten nachgestellt. Das Ermitteln des virtuellen Klangbilds 31 wird ebenso durch das Computerprogrammprodukt 40 durchgeführt, das mit dem Digitalen Zwilling 25 zumindest gekoppelt ist.

Ferner umfasst das Verfahren 100 einen vierten Schritt 140, in dem das virtuelle Klangbild 31 an den Benutzer 33 ausgegeben wird. Zusätzlich wird durch den Benutzer 33 über eine Auswahl 23 im virtuellen Raum 20 ein Akustikmodus des Verfahrens 100 geändert. Durch die Akustikmodus-Änderung 41 wird die Ausgabe des virtuellen Klangbilds 31 angepasst. Es wird ein Frequenzbereich des virtuellen Klangbilds 31 ausgewählt, das in einem für Menschen unhörbaren Frequenzspektrum 52 liegt. Infolge der Akustikmodus-Änderung 41 wird der Anteil des virtuellen Klangbilds 31 über eine Frequenzverschiebung 54 in ein für den Menschen hörbares Frequenzspektrum 51 verschoben. Basierend auf dem ausgewählten Anteil im für Menschen unhörbaren Frequenzspektrum 52 des und der Frequenzverschiebung 54 wird ein frequenzverschobenes Klangbild 39 ermittelt und an den Benutzer 33 ausgegeben. Das frequenzverschobene Klangbild 39 ist ein akustisches Gegenstück zu einer Falschfarbendarstellung, wie beispielsweise bei Infrarot-Bildgebung. Dadurch werden die für den Menschen nicht hörbaren Frequenzspektren 52, die im ortabhängigen Klangbild 38 vorliegen, bei der Begehung des virtuellen Raums 20 durch den Benutzer unmittelbar auswertbar. Bei den für den Menschen unhörbaren Frequenzspektren 52 handelt es sich um Ultraschall-Emissionen und/oder Infraschall-Emissionen.

Das Ausgeben des virtuellen Klangbilds 31 und des frequenzverschobenen Klangbilds 39 an den Benutzer 33 erfolgt über das Virtual-Reality-Headset 32. Das Ausgeben erfolgt binaural und stellt eine Auralisierung 55 dar. Dementsprechend stimmt das virtuelle Klangbild 31 mit dem ortabhängigen Klangbild 38 überein, das an der Position 11 in der Anlage 10 wahrnehmbar ist, die der vorgegebenen Empfängerposition 26 entspricht. Dies gilt analog unter Berücksichtigung der Frequenzverschiebung 54 für das frequenzverschobene Klangbild 39. Durch das ausgegebene virtuelle Klangbild 31 und/oder das frequenzverschobene Klangbild 39 wird durch den Benutzer 33 ein bestimmungswidriger Zustand der Anlage 10 erkannt. Ebenso erfolgt im vierten Schritt 140 ein Ausgeben 43 des virtuellen Klangbilds 31 und/oder des frequenzverschobenen Klangbilds 39 an eine Künstliche Intelligenz 50, die mit dem Computerprogrammprodukt 45 zumindest zusammenwirkt. Die Künstliche Intelligenz 50 ist als Neuronales Netz ausgebildet und dazu geeignet, das virtuelle Klangbild 31 und/oder das frequenzverschobene Klangbild 39 mit Klangbildern aus einer Datenbank 46 zu vergleichen, die mit der Auswertungseinheit 40 über eine kommunikative Datenverbindung 42 verbunden ist. Zum Erkennen des bestimmungswidrigen Betriebszustands wird ein Soll-Klangbild aus der Datenbank 46, dass einem Bereich der vorgegebenen Empfängerposition 26 zugeordnet ist, mit dem virtuellen Klangbild 31 und/oder dem frequenzverschobenen Klangbild 39 durch die Künstliche Intelligenz 50 verglichen. Wenn ein bestimmungswidriger Betriebszustand der Anlage 10 erkannt wird, wird eine Warnung 48 ausgegeben. Die Warnung 48 wird über eine kommunikative Datenverbindung 42 zwischen der Auswertungseinheit 40 und der Steuereinheit 60 übertragen und so eine Reaktion durch das Steuerungsprogramm 65 ermöglicht. Das Verfahren 100 erlaubt es, dass der virtuelle Raum 20, in dem die Anlage 10 nachgestellt ist, von diesem entfernt dargestellt werden kann. Die Anlage 10 ist durch das Verfahren 100 nach FIG 3 somit für den Benutzer 33 ortsunabhängig inspizierbar. Zusätzlich wird mit der Analyse des frequenzverschobenen Klangbilds 39 eine zusätzliche Diagnostikmöglichkeit bereitgestellt, die bei einer Begehung der Anlage 10 in Präsenz nicht praktikabel durchführbar ist.

## Patentansprüche

1. Verfahren (100) zum Erkennen eines bestimmungswidrigen Betriebszustands einer Anlage (10), die als Automatisierungssystem ausgebildet ist und die eine Mehrzahl an Komponenten (12, 13, 14, 17) umfasst, die jeweils als Schallquelle (56, 58), als zumindest teilweise schallreflektierendes Objekt und/oder zumindest teilweise schallschluckendes Objekt ausgebildet sind, umfassend die Schritte:
a) Bereitstellen der Anlage (10) in einem aktiven Betriebszustand und Bereitstellen eines virtuellen Raums (20), in dem die Anlage (10) zumindest teilweise nachgestellt ist;
b) Erfassen eines ersten und eines zweiten Klangbilds (36, 37) mittels eines ersten bzw. zweiten Schallsensors (18.1) und Ermitteln eines von einer ersten Schallquelle (56) emittierten Klangs (19);
c) Vorgeben einer Empfängerposition (26) innerhalb des virtuellen Raums (20) und Ermitteln eines virtuellen Klangbilds (31) an der Empfängerposition (26);
d) Ausgeben des virtuellen Klangbilds (31) an einen Benutzer (33) und/oder eine Künstliche Intelligenz (50) und Erkennen eines bestimmungswidrigen Betriebszustands anhand des an der Empfängerposition (26) vorliegenden virtuellen Klangbilds (31);
e) Auswählen einer virtuellen Schallquelle (28, 29) durch einen Benutzer (33);
f) Ermitteln eines schallquellenspezifischen Klangbilds (34) anhand zumindest des ersten und zweiten Klangbilds (36, 37);
**dadurch gekennzeichnet, dass** das Verfahren (100) weiter den Schritt umfasst:
g) Ausgeben des schallquellenspezifischen Klangbilds (34) bei reduzierter Schallkulisse.

2. Verfahren (100) nach Anspruch 1, **dadurch gekennzeichnet, dass** im Schritt b) die erste Schallquelle (56) als erste virtuelle Schallquelle (28) im virtuellen Raum (20) abgebildet wird.

3. Verfahren (100) nach Anspruch 2, **dadurch gekennzeichnet, dass** die Schritte a) bis c) für eine zweite Schallquelle (58) durchgeführt werden und im Schritt d) das virtuelle Klangbild (31) anhand einer Kombination der ersten und zweiten virtuellen Schallquelle (56, 58) durchgeführt wird.

4. Verfahren (100) nach einem der Ansprüche 1 bis 3, **dadurch gekennzeichnet, dass** das virtuelle Klangbild (31) auf einem Virtual-Reality-Headset (32) ausgegeben wird, auf dem die Anlage (10) virtuell begehbar dargestellt wird.

5. Verfahren (100) nach Anspruch 4, **dadurch gekennzeichnet, dass** für eine virtuelle Schallquelle (28, 29) in einer Darstellung auf dem Virtual-Reality-Headset (32) nach Auswahl durch einen Benutzer (33) ein Betriebsdatensatz (62) der korrespondierenden Schallquelle (56, 58) visuell ausgegeben wird.

6. Verfahren (100) nach einem der Ansprüche 1 bis 5, **dadurch gekennzeichnet, dass** zumindest eine der Komponenten (12, 13, 14, 17) der Anlage (10) ein Motor (14), eine Pumpe, ein Rührwerk (17), ein Lüfter (13), oder eine mechanische Applikation ist.

7. Verfahren (100) nach einem der Ansprüche 1 bis 6, **dadurch gekennzeichnet, dass** das schallquellenspezifische Klangbild (34) zumindest einer virtuellen Schallquelle (28, 29) der Künstlichen Intelligenz (50) zum Erkennen eines bestimmungswidrigen Betriebszustands der korrespondierenden Schallquelle (56, 58) in der Anlage (10) bereitgestellt wird.

8. Verfahren (100) nach einem der Ansprüche 1 bis 7, **dadurch gekennzeichnet, dass** der erste und/oder zweite Schallsensor (18, 18.1, 18.2) als Mikrofon, Richtmikrofon oder als Schallkamera ausgebildet ist.

9. Verfahren (100) nach einem der Ansprüche 1 bis 8, **dadurch gekennzeichnet, dass** eine Ultraschall-Emission oder eine Infraschall-Emission mit verschobener Frequenzlage im menschlich hörbaren Spektrum (51) ausgegeben wird.

10. Computerprogrammprodukt (45), das zum Empfangen und Verarbeiten von Messdaten einer Mehrzahl an Schallsensoren (18, 18.1, 18.2) und zum visuellen und akustischen Nachstellen eines virtuellen Raums (20) ausgebildet ist, **dadurch gekennzeichnet, dass** das Computerprogrammprodukt (45) dazu eingerichtet ist, ein Verfahren (100) nach einem der Ansprüche 1 bis 9 durchzuführen.

11. Computerprogrammprodukt (45) nach Anspruch 10, **dadurch gekennzeichnet, dass** das Computerprogrammprodukt (45) mit einem Digitalen Zwilling (25) einer nachzustellenden Anlage (10) gekoppelt ist oder den Digitalen Zwilling (25) umfasst.

12. Auswertungseinheit (40), die zum Empfangen von Messsignalen von einer Mehrzahl an Schallsensoren (18, 18.1, 18.2) ausgebildet ist und über eine Datenschnittstelle zu einem Empfangen von Betriebsdaten (62) einer nachzustellenden Anlage (10) ausgebildet ist, wobei ein Computerprogrammprodukt (45) ausführbar auf der Auswertungseinheit (40) gespeichert ist, **dadurch gekennzeichnet, dass** das Computerprogrammprodukt (45) nach Anspruch 10 oder 11 ausgebildet ist.

13. Auswertungseinheit (40) nach Anspruch 12, **dadurch gekennzeichnet, dass** die Datenschnittstelle zum Empfangen von Betriebsdaten (62) als Application Programming Interface ausgebildet ist.

14. Anlage (10), die zum Durchführen eines Anlagenprozesses (15) eine Mehrzahl an Komponenten (12, 13, 14, 17) umfasst, die jeweils als Schallquelle (56, 58), als zumindest teilweise schallreflektierendes Objekt und/oder als zumindest teilweise schallschluckendes Objekt ausgebildet sind, **dadurch gekennzeichnet, dass** die Anlage (10) eine Auswertungseinheit (40) nach Anspruch 12 oder 13 umfasst.

15. System, umfassend ein Virtual-Reality-System (30) und eine Auswertungseinheit (40), wobei das Virtual-Reality-System (30) ein Virtual-Reality-Headset (32) aufweist und das zu einem computerbasierten Auralisieren eines Klangbilds an einer vorgebbaren Empfängerposition (26) innerhalb eines virtuellen Raums ausgebildet ist und das zu einem Erkennen eines bestimmungswidrigen Zustands einer damit nachgestellten Anlage (10) ausgebildet ist, **dadurch gekennzeichnet, dass** die Auswertungseinheit (40) nach Anspruch 13 ausgebildet ist.

## Claims

1. Method (100) for detecting an impermissible operating state of a facility (10), which is designed as an automation system and comprises a plurality of components (12, 13, 14, 17), which are each designed as a sound source (56, 58), as an at least partially sound-reflecting object and/or at least partially sound-absorbing object, comprising the steps:
a) providing the facility (10) in an active operating state and providing a virtual space (20), in which the facility (10) is at least partially simulated;
b) acquiring a first and a second acoustic pattern (36, 37) by means of a first or second sound sensor (18.1), and determining a tone (19) emitted by a first sound source (56);
c) specifying a receiver position (26) within the virtual space (20) and determining a virtual acoustic pattern (31) at the receiver position (26);
d) outputting the virtual acoustic pattern (31) to a user (33) and/or an artificial intelligence (50) and detecting an impermissible operating state using the virtual acoustic pattern (31) present at the receiver position (26);
e) a user (33) selecting a virtual sound source (28, 29);
f) determining a sound source-specific acoustic pattern (34) using at least the first and second acoustic pattern (36, 37);
**characterised in that** the method (100) further comprises the step of:
g) outputting the sound source-specific acoustic pattern (34) with reduced background noise.

2. Method (100) according to claim 1, **characterised in that** in step b) the first sound source (56) is displayed in the virtual space (20) as the first virtual sound source (28).

3. Method (100) according to claim 2, **characterised in that** steps a) to c) are carried out for a second sound source (58), and in step d) the virtual acoustic pattern (31) is realised using a combination of the first and second virtual sound sources (56, 58).

4. Method (100) according to one of claims 1 to 3, **characterised in that** the virtual acoustic pattern (31) is output on a virtual reality headset (32), on which the facility (10) is represented in a manner in which it can be virtually inspected.

5. Method (100) according to claim 4, **characterised in that**, for a virtual sound source (28, 29), an operating data set (62) for the corresponding sound source (56, 58) is output visually in a representation on the virtual reality headset (32) after selection by a user (33).

6. Method (100) according to one of claims 1 to 5, **characterised in that** at least one of the components (12, 13, 14, 17) of the facility (10) is a motor (14), a pump, an agitator (17), a fan (13), or a mechanical application.

7. Method (100) according to one of claims 1 to 6, **characterised in that** the sound source-specific acoustic pattern (34) is provided to at least one virtual sound source (28, 29) of the artificial intelligence (50) for detecting an impermissible operating state of the corresponding sound source (56, 58) in the facility (10).

8. Method (100) according to one of claims 1 to 7, **characterised in that** the first and/or second sound sensor (18, 18.1, 18.2) is embodied as a microphone, directional microphone, or as an acoustic camera.

9. Method (100) according to one of claims 1 to 8, **characterised in that** an ultrasonic emission or an infrasonic emission with shifted frequency position is output in the spectrum audible to human ears (51).

10. Computer program product (45), which is designed to receive and process measurement data from a plurality of sound sensors (18, 18.1, 18.2) and to visually and acoustically simulate a virtual space (20), **characterised in that** the computer program product (45) is configured to carry out a method (100) according to one of claims 1 to 9.

11. Computer program product (45) according to claim 10, **characterised in that** the computer program product (45) is coupled to a digital twin (25) of a facility (10) to be simulated or comprises the digital twin (25).

12. Evaluation unit (40), which is designed to receive measurement signals from a plurality of sound sensors (18, 18.1, 18.2) and is designed to receive operating data (62) via a data interface for a facility (10) to be simulated, wherein a computer program product (45) is stored on the evaluation unit (40) in an executable manner, **characterised in that** the computer program product (45) is designed according to claim 10 or 11.

13. Evaluation unit (40) according to claim 12, **characterised in that** the data interface is designed to receive operating data (62) as an application programming interface.

14. Facility (10), which, for carrying out a facility process (15), comprises a plurality of components (12, 13, 14, 17), which are each designed as a sound source (56, 58), as an at least partially sound-reflecting object and/or at least partially sound-absorbing object, **characterised in that** the facility (10) comprises an evaluation unit (40) according to claim 12 or 13.

15. System, comprising a virtual reality system (30) and an evaluation unit (40), wherein the virtual reality system (30) has a virtual reality headset (32), is designed for a computer-based auralisation of an acoustic pattern at a specifiable receiver position (26) within a virtual space, and is designed to detect an impermissible state of a facility (10) simulated therewith, **characterised in that** the evaluation unit (40) is designed according to claim 13.

## Revendications

1. Procédé (100) d'identification d'un état de fonctionnement contraire aux prescriptions d'une installation (10), qui est constituée en système d'automatisation et qui comprend une pluralité de composants (12, 13, 14, 17), qui sont constitués chacun comme source (56, 58) sonore, comme objet réfléchissant au moins partiellement le son et/ou comme objet absorbant au moins partiellement le son, comprenant les stades :
a) mettre l'installation (10) dans un état de fonctionnement actif et disposer d'un espace (20) virtuel, dans lequel l'installation (10) est reréglée ;
b) détecter une première et une deuxième figures (36, 37) sonores, au moyen d'un premier et respectivement d'un deuxième capteurs (18.1) soniques, et déterminer un son (19) émis par une première source (56) sonore ;
c) prescrire une position (26) de récepteur dans l'espace (20) virtuel et déterminer une figure (31) sonore virtuelle en la position (26) du récepteur ;
d) envoyer la figure (31) sonore virtuelle à un utilisateur (33) et/ou à une intelligence (50) artificielle et identifier un état de fonctionnement contraire aux prescriptions, à l'aide de la figure (31) sonore virtuelle présente en la position (26) du récepteur ;
e) sélection d'une source (28, 29) sonore virtuelle par un utilisateur (33) ;
f) détermination d'une figure (34) sonore, spécifique à une source sonore, à l'aide d'au moins la première et la deuxième figures (36, 37) sonores ;
**caractérisé en ce que** le procédé (100) comprend en outre le stade :
g) émission de la figure (34) sonore, spécifique à une source sonore, à fond sonore réduit.

2. Procédé (100) suivant la revendication 1, **caractérisé en ce que** dans le stade b), on reproduit la première source (56) sonore comme première source (28) sonore virtuelle dans l'espace (20) virtuel.

3. Procédé (100) suivant la revendication 2, **caractérisé en ce que** l'on effectue les stades a) à c) pour une deuxième source (58) sonore et dans le stade d) on réalise la figure (31) sonore virtuelle, à l'aide d'une combinaison de la première et de la deuxième sources (56, 58) sonores virtuelles.

4. Procédé (100) suivant l'une des revendications 1 à 3, **caractérisé en ce que** l'on envoie la figure (31) sonore virtuelle sur un virtual-reality-headset (32), sur lequel on représente, passant virtuellement, l'installation (10).

5. Procédé (100) suivant la revendication 4, **caractérisé en ce que**, pour une source (28, 29) sonore virtuelle, dans une représentation sur le virtual-reality-headset (32), on émet visuellement, après la sélection par un utilisateur (33), un ensemble (62) de données de fonctionnement de la source (56, 58) sonore correspondante.

6. Procédé (100) suivant l'une des revendications 1 à 5, **caractérisé en ce qu'**au moins l'un des composants (12, 13, 14, 17) de l'installation (10) est un moteur (14), une pompe, un agitateur (17), un ventilateur (13) ou une application mécanique.

7. Procédé (100) suivant l'une des revendications 1 à 6, **caractérisé en ce que** la figure (34) sonore, spécifique a une source sonore, au moins d'une source (28, 29) sonore virtuelle est mise à la disposition de l'intelligence (50) artificielle pour l'identification d'un état de fonctionnement contraire aux prescriptions de la source (56, 58) sonore correspondante dans l'installation (10).

8. Procédé (100) suivant l'une des revendications 1 à 7, **caractérisé en ce que** le premier et/ou le deuxième capteur (18, 18.1, 18.2) sonique est constitué sous la forme d'un microphone, d'un microphone directionnel ou d'une caméra acoustique.

9. Procédé (100) suivant l'une des revendications 1 à 8, **caractérisé en ce que** l'on émet une émission ultrasonore ou une émission infrasonore ayant une position en fréquence décalée dans le spectre (51) audible par l'homme.

10. Produit (45) de programme d'ordinateur, qui est constitué pour la réception et le traitement de données de mesure d'une pluralité de capteurs (18, 18.1, 18.2) soniques et pour le reréglage visuel et acoustique d'un espace (20) virtuel, **caractérisé en ce que** le produit (45) de programme d'ordinateur est agencé pour exécuter un procédé (100) suivant l'une des revendications 1 à 9.

11. Produit (45) de programme d'ordinateur suivant la revendication 10, **caractérisé en ce que** le produit (45) de programme d'ordinateur est accouplé à un double (25) numérique d'une installation (10) à rerégler ou comprend le double (25) numérique.

12. Unité (40) d'évaluation, qui est constituée pour la réception de signaux de mesure d'une pluralité de capteurs (18, 18.1, 18.2) soniques et qui est constituée pour la réception, par l'intermédiaire d'une interface de données, de données (62) de fonctionnement de l'installation (10) à rerégler, dans laquelle un produit (45) de programme d'ordinateur est mis en mémoire, de manière à pouvoir être réalisé sur l'unité (40) d'évaluation, **caractérisée en ce que** le produit (45) de programme d'ordinateur est constitué suivant la revendication 10 ou 11.

13. Unité (40) d'évaluation suivant la revendication 12, **caractérisée en ce que** l'interface de données est constituée pour la réception de données (62) de fonctionnement comme application programming interface.

14. Installation (10), qui comprend pour l'exécution d'un processus (15) d'installation, une pluralité de composants (12, 13, 14, 17), qui sont constitués chacun comme source (56, 58) sonore, comme au moins un objet réfléchissant au moins partiellement le son et/ou comme objet absorbant au moins partiellement le son, **caractérisée en ce que** l'installation (10) comprend une unité (40) d'évaluation suivant la revendication 12 ou 13.

15. Système, comprenant un system (30) virtual-reality et une unité (40) d'évaluation, dans lequel le system (30) virtual-reality a un virtual-reality-headset (32) et qui est constitué pour une auralisation informatique d'une figure sonore en une position (26) de réception pouvant être donnée à l'avance dans un espace virtuel, et qui est constitué pour une identification d'un état contraire aux prescriptions d'une installation (10) ainsi reréglée, **caractérisé en ce que** l'unité (40) d'évaluation est constituée suivant la revendication 13.
